# EUROPÄISCHE PATENTSCHRIFT

(11) **EP 3 059 046 B1**
(45) Veröffentlichungstag und Bekanntmachung des Hinweises auf die Patenterteilung: **15.08.2018**
(21) Anmeldenummer: 16154472.1
(22) Anmeldetag: 05.02.2016
(51) Int. Cl.: B23P 15/14, B21J 5/00, B21K 1/30, B21C 23/22, B21C 35/02, F16H 55/06, F16H 55/17, B23K 11/16, B23K 20/02, B23K 20/227

(54) **VERFAHREN ZUR HERSTELLUNG EINES HYBRIDZAHNRADS, STRANGPRESSPROFILBAUTEIL SOWIE HYBRIDZAHNRAD**
METHOD FOR PRODUCING A HYBRID GEARWHEEL, EXTRUDED PROFILED COMPONENT AND HYBRID GEARWHEEL
PROCÉDÉ DE FABRICATION D'UNE ROUE DENTÉE HYBRIDE, COMPOSANT DE PROFILÉ EXTRUDÉ ET ROUE DENTÉE HYBRIDE

(30) Priorität: 18.02.2015 DE 102015102297
(43) Veröffentlichungstag der Anmeldung: 24.08.2016
(73) Patentinhaber: Gottfried Wilhelm Leibniz Universität Hannover, 30167 Hannover (DE)
(72) Erfinder: Maier, Hans Jürgen Prof. Dr., 31535 Neustadt am Roge (DE); Nürnberger, Florian Dr., 30167 Hannover (DE); Hassel, Thomas Dr., 30419 Hannover (DE); Klose, Christian Dr., 30419 Hannover (DE)
(74) Vertreter: Günther, Constantin

(56) Entgegenhaltungen:
- CN-Y- 2 509 423
- GB-A- 399 295
- GB-A- 2 220 595
- US-A1- 2014 007 636
- US-A1- 2014 298 940
- Klaus-Georg Kosch ET AL: "Production of Local Requirement-Optimised Hybrid Components with Compound Forging", SCHMIEDEJOURNAL, 1. März 2013 (2013-03-01), Seiten 60-63, XP055280826, Gefunden im Internet: URL:http://www.massiverleichtbau.de/filead min/info/informationen_aus_der_branche/201 3-03_Hybridbauteile_durch_Verbundschmieden _Veroeffentlichung_SchmiedeJOURNAL.pdf [gefunden am 2016-06-15]
- BEHREN, BA ET AL: "VERBUNDSTRANGPRESSEN UND ANSCHLIESENDES SCHMIEDEN KONTINUIERLICH ERSTARKTER ALUMINIUMHALBZEUGE", METALL, Bd. 66, 1. Oktober 2012 (2012-10-01), Seiten 454-457, XP002758846,
- Klaus-Georg Kosch ET AL: "Schmieden von partiell stahlverstärkten Aluminiumhalbzeugen", , 1. März 2012 (2012-03-01), Seiten 1-9, XP055280833, Gefunden im Internet: URL:http://www.drahtmagazin.de/binary_data /3031444_ifum-iul-schmieden.pdf [gefunden am 2016-06-15]

## Beschreibung

Die Erfindung betrifft ein Verfahren zur Herstellung eines Hybridzahnrads mit einer Vielzahl von Zähnen. Die Erfindung betrifft ferner ein Strangpressprofilbauteil mit kreisförmigem Querschnitt sowie ein Hybridzahnrad, aufweisend eine Nabe und eine Vielzahl von die Nabe umgebenden Zähnen.
Zahnräder sind in der Antriebstechnik in Form von Stirnrädern, Kegelrädern und ähnlichem allgemein bekannt. In verschiedenen Bereichen der Technik gibt einen verstärkten Bedarf an leichtbauenden Komponenten. So sollen z. B. elektrisch angetriebene Fahrräder (E-Bikes) möglichst leicht sein, damit sie vom Benutzer gut handhabbar sind. Ansätze für eine Gewichtsreduzierung durch die Verwendung von Kunststoffen als Konstruktionswerkstoffe für Zahnrädern haben den Nachteil, dass die Bauteile relativ schnell verschleißen.
Aus der DE 10 2004 036 336 A1 geht ein Vorschlag für die Herstellung eines Hybridzahnrads hervor. Als Hybridzahnrad bezeichnet man ein Zahnrad, das aus unterschiedlichen Materialien aufgebaut ist. Die CN 2 509 423 Y offenbart ein Strangpressprofilbauteil gemäß dem Oberbegriff des Anspruchs 6.

Der Erfindung liegt die Aufgabe zugrunde, ein rationell ausführbares Verfahren zur Herstellung eines Hybridzahnrads anzugeben, mit dem leichte und dennoch verschleißfeste Zahnräder gefertigt werden können. Ferner soll ein hierfür geeignetes Strangpressprofilbauteil sowie ein entsprechendes Zahnrad angegeben werden. Diese Aufgabe wird gelöst durch ein Verfahren zur Herstellung eines Hybridzahnrades mit einer Vielzahl von Zähnen, wobei auf einen scheibenförmig bereitgestellten Leichtmetallkern an dessen äußerer Umfangsseite mittels einer stoffschlüssigen Verbindungstechnik härtbarer und/oder vergütbarer Stahl zumindest stellenweise aufgebracht ist bzw. aufgebracht wird und der so erhaltene Rohling anschließend mittels eines Umformvorgangs zum Hybridzahnrad umgeformt wird, wobei eine Zahnflanke oder beide gegenüberliegende Zahnflanken der Zähne des Hybridzahnrads an ihrer Außenoberfläche den zuvor aufgebrachten härtbaren und/oder vergütbaren Stahl als Oberflächenbeschichtung aufweisen.

Die Erfindung hat den Vorteil, dass mit einfach ausführbaren Prozessschritten und damit in kostengünstiger Weise ein sehr robustes Hybridzahnrad mit äußerst geringem Gewicht hergestellt werden kann. Gewichtsintensive Materialien wie härtbarer und/oder vergütbarer Stahl werden nur punktuell dort angeordnet, wo eine große Oberflächenhärte erforderlich ist. Im Übrigen kann das Hybridzahnrad weitgehend aus Leichtmetall hergestellt werden, z. B. aus Aluminium- oder Magnesiumlegierungen. Somit wird ein Verfahren angegeben, mit dem leichte und dennoch verschleißfeste Zahnräder gefertigt werden können.

Der Umformvorgang kann z. B. ein Schmiedevorgang sein, z. B. Präzisionsschmieden. Als stoffschlüssige Verbindungstechnik zum Verbinden des härtbaren und/oder vergütbaren Stahls mit dem Leichtmetallkern eignet sich z. B. das Schweißen.

Der Leichtmetallkern wird, wie bereits erwähnt, scheiben- oder scheibenförmig bereitgestellt. Der Leichtmetallkern kann insbesondere kreisscheibenförmig (oder als Zylinderabschnitt) bereitgestellt werden und weist dann nur eine umlaufende Umfangsseite auf. Der Leichtmetallkern kann auch in hiervon abweichender Form, z. B. als Vieleck, bereitgestellt werden. Dann bezieht sich der Begriff der äußeren Umfangsseite auf den gesamten Umfang des Leichtmetallkerns.

Gemäß einer vorteilhaften Weiterbildung der Erfindung wird der Leichtmetallkern an seiner äußeren Umfangsseite zunächst mit einer Kontaktschicht aus einem Stahl, der kein härtbarer und kein vergütbarer Stahl ist, versehen und der härtbare und/oder vergütbare Stahl wird dann auf diese Kontaktschicht aufgebracht. Dies hat den Vorteil, dass eine besonders haltbare stoffschlüssige Verbindung zwischen dem härtbaren und/oder vergütbaren Stahl und der Kontaktschicht hergestellt werden kann, so dass unerwünschte Ablösungen im späteren Betrieb des Hybridzahnrads auch bei hoher Belastung zuverlässig vermieden werden können.

Gemäß einer vorteilhaften Weiterbildung der Erfindung wird der Leichtmetallkern, ggf. zusammen mit der Kontaktschicht, durch einen Strangpressprozess als zunächst längliches Strangpressprofilbauteil hergestellt und durch Vereinzeln aus dem Strangpressprofilbauteil werden eine Vielzahl von Leichtmetallkernen für die Herstellung von Hybridzahnrädern erzeugt. Das Vereinzeln kann z. B. dadurch erfolgen, dass das längliche Strangpressprofilbauteil quer zur Längserstreckungsrichtung in Scheiben geteilt wird. Auf diese Weise lassen sich besonders rationell erfindungsgemäße Hybridzahnräder in großen Stückzahlen herstellen. Durch die Anwendung eines Strangpressprozesses können (konventionell) verfügbare Herstellungswerkzeuge genutzt werden. Strangpressprozesse sind zudem gut beherrschbar und führen zu zuverlässigen Ergebnissen. Durch den Strangpressprozess wird auch eine sichere, stoffschlüssige und/oder formschlüssige Verbindung zwischen dem Leichtmetallkern und der Kontaktschicht hergestellt. Dies kann z. B. dadurch erfolgen, dass ein Leichtmetall-Vollmaterialrundstab zusammen mit rohrförmigem Material für die Kontaktschicht (Stahlrohr) in einem gemeinsamen Strangpressprozess zusammengefügt und gepresst werden.

Gemäß einer vorteilhaften Weiterbildung der Erfindung wird das Strangpressprofilbauteil als wenigstens dreischichtiges Strangpressprofilbauteil hergestellt, mit einem inneren Kern aus Leichtmetall, um den Leichtmetallkern des Hybridzahnrads zu bilden, einer den inneren Kern umgebenden Kontaktschicht, z. B. mittels des zuvor erwähnten rohrförmigen Materials, sowie einer die Kontaktschicht umgebenen Umhüllungsschicht, die beim Strangpressprozess reibungsvermindernd und/oder materialflusslenkend wirkt. Die Umhüllungsschicht kann somit eine gleitfördernde Schicht sein. Die Umhüllungsschicht kann alternativ oder zusätzlich den Effekt haben, dass sie den Materialfluss der Kontaktschicht in das Werkzeug lenkt, damit sich die hülsenförmige Kontaktschicht nicht im Rezipienten aufstaucht. Die Umhüllungsschicht kann z. B. ebenfalls aus einem Leichtmetall gebildet sein, z. B. aus einem Aluminiumwerkstoff. Hierdurch wird die Durchführung des Strangpressprozesses optimiert. Es können die gewünschten Strangpressprofilbauteile zuverlässig, mit geringem Energieaufwand und praktisch ohne Ausschuss hergestellt werden. Beim Strangpressprozess kann das Material für die Umhüllungsschicht ebenfalls in Form eines Rohrs, das außen um das Rohr für die Kontaktschicht herumgepresst wird, bereit gestellt sein.

Gemäß einer vorteilhaften Weiterbildung der Erfindung wird der härtbare und/oder vergütbare Stahl auf das Strangpressprofilbauteil vor der Vereinzelung aufgebracht, d. h. bevor das erwähnte Schneiden in scheibenförmige Teile durchgeführt wird. Dies hat den Vorteil, dass auch der Vorgang des Aufbringens des härtbaren und/oder vergütbaren Stahls fertigungstechnisch optimiert werden kann, indem nicht für jedes einzelne herzustellende Hybridzahnrad ein separater Aufbringvorgang des härtbaren und/oder vergütbaren Stahls durchgeführt werden muss, sondern in einem Durchgang ein gesamtes Strangpressprofilbauteil über seine Länge mit dem härtbaren und/oder vergütbaren Stahl belegt werden kann. Der härtbare und/oder vergütbare Stahl kann z. B. in Form von in Längsrichtung des Strangpressprofilbauteils verlaufenden Streifen auf diesem aufgebracht sein.

Die eingangs genannte Aufgabe wird außerdem gelöst durch ein Strangpressprofilbauteil gemäß Anspruch 6. Auf diese Weise kann ein vorteilhaftes Halbzeug für die Durchführung des erfindungsgemäßen Verfahrens bereitgestellt werden. Das Halbzeug, d. h. das Strangpressprofilbauteil, kann z. B. von einem anderen Hersteller oder an einem anderen Produktionsstandort hergestellt werden als die eigentlichen Hybridzahnräder. So kann das Strangpressprofilbauteil in einer Fertigungsstätte als Lagermaterial vorgehalten werden und bei Bedarf, d. h. wenn daraus Hybridzahnräder gefertigt werden sollen, abgerufen werden. Das Strangpressprofilbauteil ist mittels eines Strangpressprozesses hergestellt, z. B. wie zuvor erläutert.

Gemäß einer der Erfindung weist das Strangpressprofilbauteil am Außenumfang zumindest stellenweise stoffschlüssig auf der Kontaktschicht aufgebrachten härtbaren und/oder vergütbaren Stahl auf. Der härtbare und/oder vergütbare Stahl kann insbesondere in Form von in Längsrichtung des Strangpressprofilbauteils verlaufenden Streifen auf der Kontaktschicht aufgebracht sein. Die Anzahl der Streifen entspricht dabei in einer vorteilhaften Ausführungsform der Erfindung der Anzahl der Zähne des daraus zu fertigenden Hybridzahnrads oder dem zweifachen der Anzahl der Zähne. Es kann aus dem Material eines Streifens eine Oberflächenbeschichtung einer Zahnflanke eines Zahns des Hybridzahnrads gefertigt werden oder von zwei Zahnflanken. Je nach Fertigungsprozess ist die Anzahl der aufzubringenden Streifen festzulegen.

Die eingangs genannte Aufgabe wird außerdem gelöst durch ein Hybridzahnrad, aufweisend eine Nabe und eine Vielzahl von die Nabe umgebenden Zähnen, wobei die Nabe einen Leichtmetallkern aufweist oder daraus besteht, der zumindest im Bereich der Zahnflanken der Zähne mit einer stoffschlüssig mit dem Leichtmetallkern verbundenen metallischen Kontaktschicht beschichtet ist, die wiederum zumindest stellenweise mit einem stoffschlüssig darauf aufgebrachten härtbaren und/oder vergütbaren Stahl als Oberflächenbeschichtung beschichtet ist, die zumindest in den Bereichen der Zahnflanken angeordnet ist, die in Eingriff mit Zähnen anderer Zahnräder kommen können. Ein solches Hybridzahnrad ist bei geringem Gewicht äußerst robust und wegen der Beschichtung mit härtbarem und/oder vergütbarem Stahl sehr abriebfest. Wegen des geringen Gewichts weist das Hybridzahnrad zugleich eine geringe Massenträgheit auf, was günstig ist für Getriebeanwendungen, bei denen häufiger Drehzahlwechsel und/oder Richtungswechsel auftreten.

Die Erfindung wird nachfolgend anhand von Ausführungsbeispielen unter Verwendung von Zeichnungen näher erläutert:

Es zeigen
- Fig. 1: - ein Hybridzahnrad in Schnittdarstellung und
- Fig. 2: - zwei miteinander zusammenwirkende Hybridzahnräder und
- Fig. 3: - einen Herstellvorgang eines Hybridzahnrads in schematischer Darstellung und
- Fig. 4: - einen direkten Verbundstrangpressprozess und
- Fig. 5: - einen indirekten Verbundstrangpressprozess.

In den Figuren werden gleiche Bezugszeichen für einander entsprechende Elemente verwendet.

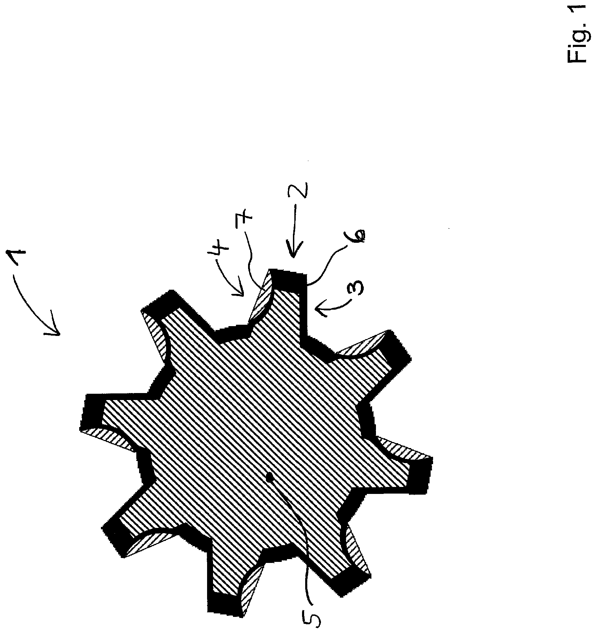

Das in Figur 1 dargestellte Hybridzahnrad 1 ist beispielhaft als Stirnrad mit acht Zähnen 2 ausgebildet. Es weist einen Leichtmetallkern 5 auf. An den äußeren Umfangsseiten weist das Hybridzahnrad 1 eine Kontaktschicht aus einem nicht härtbaren und nicht vergütbaren Stahl auf. Die jeweils in Drehrichtung des Hybridzahnrads vordere Zahnflanke 4 der jeweils zwei Zahnflanken 3, 4 eines Zahns 2 ist mit einer Oberflächenbeschichtung 7 aus einem härtbaren und/oder vergütbaren Stahl versehen. Wird ein Zahnrad benötigt, das in beiden Drehrichtungen Kräfte übertragen soll, sind in einer vorteilhaften Ausgestaltung beide Zahnflanken 3, 4 eines Zahns 2 mit der Oberflächenbeschichtung 7 versehen.

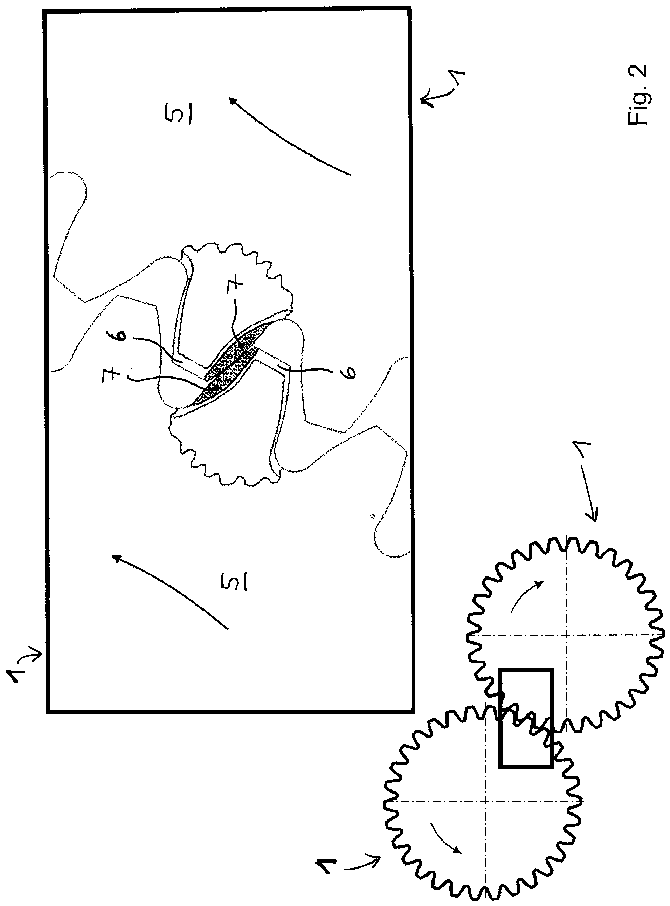

Die Figur 2 zeigt links unten zwei Hybridzahnräder 1, die als Getriebestufe zusammenwirken. Ein in der Darstellung der zwei Hybridzahnräder 1 durch ein Rechteck markierter Bereich ist in der Figur 2 rechts oben in Form einer Ausschnittsvergrößerung wiedergegeben. Erkennbar ist hier im Detail, wie die mit der Oberflächenbeschichtung 7 versehenen Zahnflanken 4 miteinander zusammenwirken. Andere Bereiche der Zähne, insbesondere die nur mit der Kontaktschicht 6 versehenen Bereiche, sollen dabei möglichst nicht miteinander in Kontakt kommen oder zumindest keine nennenswerten Kräfte übertragen.

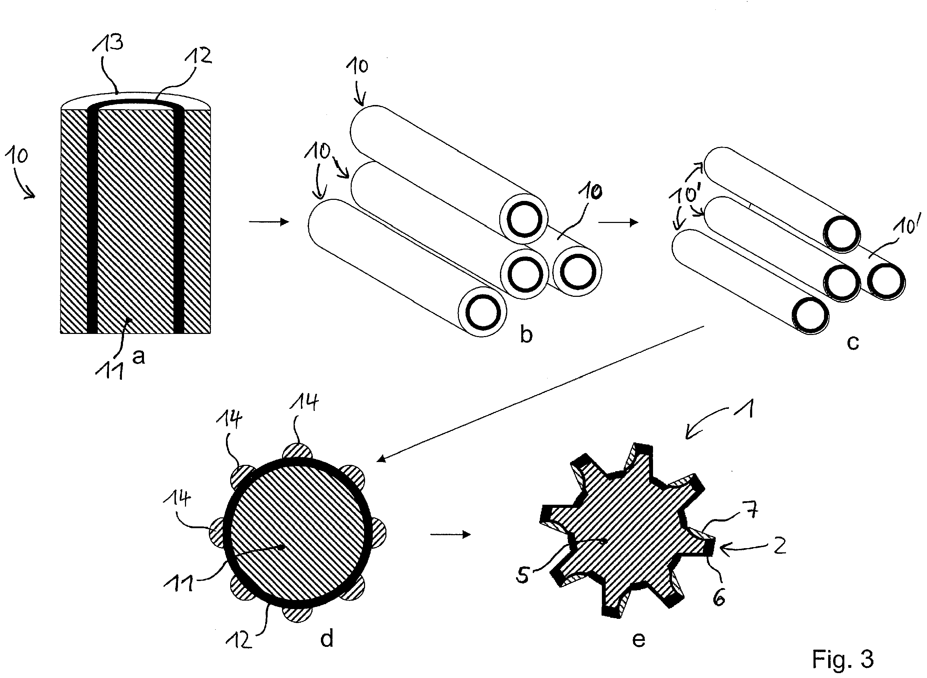

Die Figur 3 zeigt den Herstellungsprozess eines Hybridzahnrads 1 in vereinfachter schematischer Darstellung. Es wird zunächst von einem Strangpressprofilbauteil 10 ausgegangen, das in der Figur 3a in einem Längsschnitt dargestellt ist. Erkennbar ist ein dreischichtiger Aufbau mit einem inneren kreiszylindrischen Kern 11 aus einem Leichtmetall, einem hülsenförmig darum angeordneten Bereich, der eine Kontaktschicht 12 aus einem metallischen Material bildet und ein diesen Bereich 12 außen umgebender, hülsenförmiger Materialbereich 13, der aus einem Material, z. B. einem Leichtmetall, gebildet ist, um eine Umhüllungsschicht zu bilden, die beim Strangpressprozess reibungsvermindernd am Rezipienten wirkt. Die Umhüllungsschicht 13 ist nicht in allen Fällen erforderlich. Sie ist insbesondere vorteilhaft, wenn für den Strangpressprozess ein Rezipient verwendet wird, der ansonsten eine zu hohe Reibung mit der Kontaktschicht 12 hätte, z. B. aus demselben Material ist wie die Kontaktschicht 12, z. B. aus Stahl. Dier Umhüllungsschicht hat dann einen reibungsvermindernden und somit gleitfördernden Effekt. Die Umhüllungsschicht 13 hat den weiteren Vorteil, dass sie den Materialfluss der Kontaktschicht 12 in das Werkzeug lenkt, damit sich die hülsenförmige Kontaktschicht nicht im Rezipienten aufstaucht.

Durch die Wahl des passenden Umformgrads beim Strangpressen findet dabei ein Diffusionsschweißprozess zwischen der Kontaktschicht 12 und dem Leichtmetallkern 11 statt, der beide Werkstoffe miteinander verschweißt.

Bei dem in Figur 3a dargestellten Strangpressprofilbauteil können die Durchmesserverhältnisse z. B. wie folgt gewählt werden:
Leichtmetallkern 11 : Kontaktschicht 12 : Schicht 13 = 80 : 15 : 30

Das in Figur 3a dargestellte Strangpressprofilbauteil ist durch einen Strangpressprozess, der nachfolgend noch näher beschrieben wird, hergestellt worden. Durch den Strangpressprozesses werden so viele Strangpressprofilbauteile 10 hergestellt, wie für die Herstellung der gewünschten Anzahl von Hybridzahnrädern erforderlich ist. Die Figur 3b zeigt in einer perspektivischen Darstellung beispielhaft 4 Strangpressprofilbauteile 10.

Bevor aus den in Figur 3b dargestellten Strangpressprofilbauteilen 10 die weiteren Fertigungsschritte für die Herstellung des Hybridzahnrads durchgeführt werden können, ist zunächst die Umhüllungsschicht 13 zu entfernen, z. B. durch Abschleifen oder Abdrehen. Dabei ist es vorteilhaft, das Strangpressprofilbauteil durch eine Strangausziehvorrichtung (Puller) für den Prozess des Entfernens der Umhüllungsschicht 13 zu zentrieren. Die Figur 3c zeigt in perspektivischer Ansicht die entsprechend nachbearbeiteten Strangpressprofilbauteile 10', die nicht mehr die Umhüllungsschicht 13 aufweisen.

Sodann kann aus den nachbearbeiteten Strangpressprofilbauteilen 10' ein Rohling hergestellt werden, der für die weiteren Herstellungsschritte benötigt wird. Dies kann z. B. dadurch geschehen, dass an dem nachbearbeiteten Strangpressprofilbauteil 10' auf der nun außen liegenden Kontaktschicht 12 in Streifenform in Längsrichtung mittels eines stoffschlüssigen Verbindungsprozesses der härtbare und/oder vergütbare Stahl 14 aufgebracht wird, z. B. in Form von streifenförmigen länglichen Schweißraupen. Dies kann z. B. derart durchgeführt werden, dass die vorherigen Herstellungsschritte in einer vertikalen Lage der Strangpressprofilbauteile durchgeführt werden und eine entsprechende Schweißmaschine bereitgestellt ist, die bei vertikal entlang von Schweißelektroden geführtem Strangpressprofilbauteil die streifenförmigen Schweißraupen aus dem Stahl 14 aufbringen. Die Aufbringung der streifenförmigen Schweißnähte in vertikaler Richtung hat den Vorteil, dass die Schwerkraft sinnvoll genutzt werden kann, um die Fließrichtung des Schweißbades in der gewünschten Richtung längs des Strangpressprofilbauteils zu führen. Die Figur 3d zeigt das mit den Schweißnähten aus dem Stahl 14 versehene Strangpressprofilbauteil 10' im Querschnitt.

Anschließend wird der gemäß Figur 3d bereitgestellte Rohling zu scheibenförmigen Teilen vereinzelt, die jeweils einen Leichtmetallkern 11, die Kontaktschicht 12 sowie den Stahl 14 aufweisen. Hieraus wird dann durch einen Schmiedevorgang das Material in die in Figur 3e dargestellte Zahnradform umgeformt. Durch den Umformvorgang erhalten die Bauteile zudem die für Zahnräder notwendige Festigkeitssteigerung durch Kornfeinung. Um die erwünschte Oberflächenhärte und Oberflächenpräzision zu erhalten, wie sie für ein Zahnrad erforderlich sind, folgt hiernach ein Härtevorgang, insbesondere ein Härten des härtbaren und/oder vergütbaren Stahls 14, und ein anschließender Schleifprozess.

Wie erkennbar ist, wird der Leichtmetallkern 11 des Rohlings zum Leichtmetallkern 5 des Hybridzahnrads 1 umgeformt. Die Kontaktschicht 12 des Rohlings wird zur Kontaktschicht 6 des Hybridzahnrads 1 umgeformt. Aus dem aufgeschweißten Stahl 14 wird die Oberflächenbeschichtung 7 des Hybridzahnrads 1 geformt.

Die Kontaktschicht 6, 12 kann z. B. aus IF-Stahl gebildet sein, z.B. ein DCxx/DExx. Der Leichtmetallkern 5, 11 kann aus Aluminium, Magnesium und einem anderen Leichtmetall oder einer Legierung davon bestehen, z.B. aus einer hochfesten Aluminium-Knetlegierung, insbesondere EN AW-6082 (AlMgSi1), oder einer Magnesium-Knetlegierung, insbesondere AZ31. Dies erlaubt die Übertragung relativ hoher Drehmomente im Kern des Hybridzahnrads 1. Die Oberflächenbeschichtung 7 bzw. der Stahl 14 kann ein 42CrMo4 sein.

Je nach verwendeten Materialien kann der durch einen Schweißprozess verursachte Wärmeeintrag zu einer Versprödung des Übergangsgefüges durch Bildung intermetallischer Phasen zwischen den Metallen führen. In solchen Fällen ist es vorteilhaft, Diffusionsbarrieren zwischen den Metallen vorzusehen. Hierfür kann z. B. Silizium als Legierungsbestandteil verwendet werden. Es kann auch eine Siliziumschicht zwischen die verschiedenen Metalle eingebracht werden, die als Diffusionsbarrieren eine Versprödung des Übergangsbereichs verhindern kann.

Die Verwendung der beschriebenen Prozesskette hat den zusätzlichen Vorteil, dass beliebige Zahnradkerne endlos hergestellt werden können. So können sowohl Speichenzahnräder als auch konkave Formen hergestellt werden. Auf aufwändige Zerspanungsverfahren kann verzichtet werden.

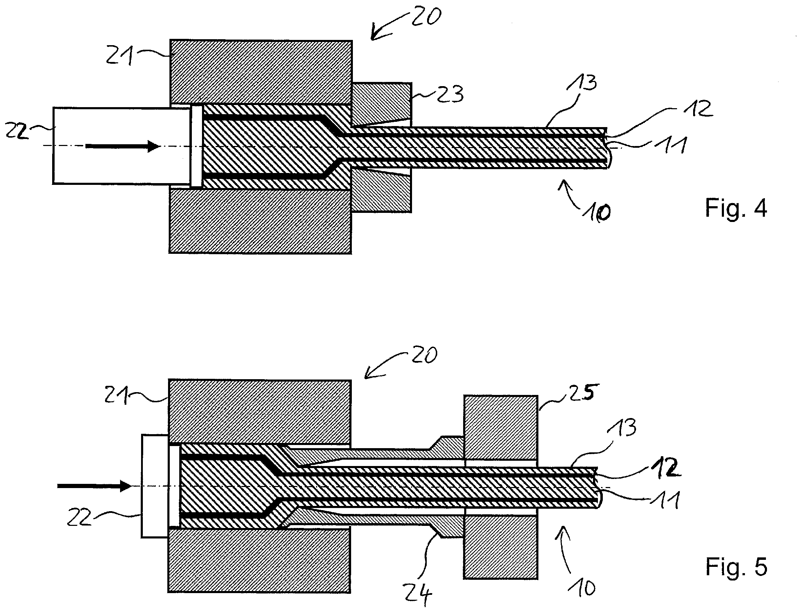

Die Figuren 4 und 5 zeigen jeweils eine Strangpressvorrichtung 20 sowie die stranggepressten Materialien im Querschnitt entlang der Pressrichtung. Die Figur 4 zeigt eine Strangpressvorrichtung 20 für direktes Strangpressen. Die Strangpresseinrichtung 20 gemäß Figur 4 weist einen Rezipienten 21, einen Pressstempel 22, ggf. mit Pressscheibe, sowie eine Matrize 23 auf. Das zu verarbeitende Material wird von links zugeführt und mittels des Pressstempels 22 durch den Rezipienten 21 gepresst. Durch die Verjüngung an der Matrize 23 werden die zugeführten Materialien auf einen geringeren Querschnitt zusammengepresst und treten als Strangpressprofilbauteil 10 mit der anhand der Figur 3a erläuterten Zusammensetzung rechts aus der Strangpressvorrichtung 20 aus.

Die Figur 5 zeigt eine Strangpressvorrichtung 20 für indirektes Strangpressen. Es ist wiederum ein Rezipient 21 sowie ein Pressstempel 22 vorhanden. Für den eigentlichen Pressprozess wird eine für ein indirektes Strangpressen ausgebildete Matrize 24 mit einem Halter 25 eingesetzt. Das von links zugeführte Rohmaterial wird hierbei wiederum auf einen geringeren Querschnitt zusammengepresst und tritt rechts als Strangpressprofilbauteil 10 aus.

## Patentansprüche

1. Verfahren zur Herstellung eines Hybridzahnrads (1) mit einer Vielzahl von Zähnen (2), **dadurch gekennzeichnet, dass** auf einen scheibenförmig bereitgestellten Leichtmetallkern (5) an dessen äußerer Umfangsseite mittels einer stoffschlüssigen Verbindungstechnik härtbarer und/oder vergütbarer Stahl (14) zumindest stellenweise aufgebracht ist und der so erhaltene Rohling anschließend mittels eines Umformvorgangs zum Hybridzahnrad (1) umgeformt wird, wobei eine Zahnflanke (3, 4) oder beide gegenüberliegende Zahnflanken (3, 4) der Zähne (2) des Hybridzahnrads (1) an ihrer Außenoberfläche den zuvor aufgebrachten härtbaren und/oder vergütbaren Stahl (14) als Oberflächenbeschichtung (7) aufweisen.

2. Verfahren nach Anspruch 1, **dadurch gekennzeichnet, dass** der Leichtmetallkern (5) an seiner äußeren Umfangsseite zunächst mit einer Kontaktschicht (6, 12) aus einem Stahl, der kein härtbarer und kein vergütbarer Stahl ist, versehen wird und der härtbare und/oder vergütbare Stahl (14) dann auf diese Kontaktschicht (6, 12) aufgebracht wird.

3. Verfahren nach einem der vorhergehenden Ansprüche, **dadurch gekennzeichnet, dass** der Leichtmetallkern (5), ggf. zusammen mit der Kontaktschicht (6, 12), durch einen Strangpressprozess als zunächst längliches Strangpressprofilbauteil (10, 10') hergestellt wird und durch Vereinzeln aus dem Strangpressprofilbauteil (10, 10') eine Vielzahl von beschichteten Leichtmetallkernen für die Herstellung von Hybridzahnrädern (1) erzeugt werden.

4. Verfahren nach dem vorhergehenden Anspruch, **dadurch gekennzeichnet, dass** das Strangpressprofilbauteil (10, 10') als wenigstens dreischichtiges Strangpressprofilbauteil hergestellt wird, mit einem inneren Kern (11) aus Leichtmetall, um den Leichtmetallkern (5) des Hybridzahnrads (1) zu bilden, einer den inneren Kern (11) umgebenden Kontaktschicht (12) sowie einer die Kontaktschicht (12) umgebenden Umhüllungsschicht (13), die beim Strangpressprozess reibungsvermindernd und/oder materialflusslenkend wirkt.

5. Verfahren nach einem der Ansprüche 3 bis 4, **dadurch gekennzeichnet, dass** der härtbare und/oder vergütbare Stahl (14) auf das Strangpressprofilbauteil (10, 10') vor der Vereinzelung aufgebracht wird.

6. Strangpressprofilbauteil mit kreisförmigem Querschnitt, wobei das Strangpressprofilbauteil (10, 10') eine hülsenförmige äußere Kontaktschicht (12) aus einem Material, das ein stoffschlüssiges Aufbringen von härtbarem und/oder vergütbarem Stahl (14) erlaubt, und einen inneren im Querschnitt kreisförmigen Kern (11) aus Leichtmetall aufweist, wobei der Kern (12) mit der hülsenförmigen äußeren Kontaktschicht stoffschlüssig verbunden ist, **dadurch gekennzeichnet, dass** das Strangpressprofilbauteil (10, 10') am Außenumfang zumindest stellenweise stoffschlüssig auf der Kontaktschicht (12) aufgebrachten härtbaren und/oder vergütbaren Stahl (14) aufweist.

7. Strangpressprofilbauteil nach dem vorhergehenden Anspruch, **dadurch gekennzeichnet, dass** der härtbare und/oder vergütbare Stahl (14) in Form von in Längsrichtung des Strangpressprofilbauteils (10, 10') verlaufenden Streifen auf der Kontaktschicht (12) aufgebracht ist.

8. Hybridzahnrad (1), aufweisend eine Nabe und eine Vielzahl von die Nabe umgebenden Zähnen (2), **dadurch gekennzeichnet, dass** die Nabe einen Leichtmetallkern (5) aufweist oder daraus besteht, der zumindest im Bereich der Zahnflanken (3, 4) der Zähne (2) mit einer stoffschlüssig mit dem Leichtmetallkern (5) verbundenen metallischen Kontaktschicht (6) beschichtet ist, die wiederum zumindest stellenweise mit einem stoffschlüssig darauf aufgebrachten härtbaren und/oder vergütbaren Stahl (14) als Oberflächenbeschichtung (7) beschichtet ist, die zumindest in den Bereichen der Zahnflanken (3, 4) angeordnet ist, die in Eingriff mit Zähnen anderer Zahnräder kommen können.

9. Hybridzahnrad nach dem vorhergehenden Anspruch, **dadurch gekennzeichnet, dass** das Hybridzahnrad (1) als Stirnrad ausgebildet ist.

## Claims

1. Method for producing a hybrid gearwheel (1) with a multiplicity of teeth (2), **characterized in that** hardenable and/or temperable steel (14) is applied at least at points by means of an integrally joining connecting technique to the outer circumferential side of a light metal core (5) which is provided in a disc-shaped manner, and the blank which is thus obtained is subsequently shaped by means of a forming operation to produce the hybrid gearwheel (1), one tooth flank (3, 4) or the two opposite tooth flanks (3, 4) of the teeth (2) of the hybrid gearwheel (1) having the previously applied hardenable and/or temperable steel (14) as a surface coating on its/their outer surface.

2. Method according to Claim 1, **characterized in that** the light metal core (5) is first of all provided on its outer circumferential side with a contact layer (6, 12) made from a steel which is not a hardenable and not temperable steel, and the hardenable and/or temperable steel (14) is then applied to the said contact layer (6, 12).

3. Method according to either of the preceding claims, **characterized in that** the light metal core (5), possibly together with the contact layer (6, 12), is produced by way of an extrusion process as an initially elongate extruded profile component (10, 10'), and a multiplicity of coated light metal cores for the production of hybrid gearwheels (1) are produced by way of separation from the extruded profile component (10, 10').

4. Method according to the preceding claim, **characterized in that** the extruded profile component (10, 10') is produced as an at least three-layer extruded profile component, with an inner core (11) made from light metal, in order to form the light metal core (5) of the hybrid gearwheel (1), a contact layer (12) which surrounds the inner core (11), and an encasing layer (13) which surrounds the contact layer (12) and has an effect which reduces friction and/or steers the material flow during the extrusion process.

5. Method according to either of Claims 3 and 4, **characterized in that** the hardenable and/or temperable steel (14) is applied to the extruded profile component (10, 10') before the separation.

6. Extruded profile component with a circular cross section, the extruded profile component (10, 10') having a sleeve-shaped outer contact layer (12) made from a material which permits an integrally joined application of hardenable and/or temperable steel (14), and an inner core (11) made from light metal of circular cross section, the core (12) being connected in an integrally joined manner to the sleeve-shaped outer contact layer, **characterized in that** the extruded profile component (10, 10') has, on the outer circumference, hardenable and/or temperable steel (14) which is applied at least at points in an integrally joined manner on the contact layer (12).

7. Extruded profile component according to the preceding claim, **characterized in that** the hardenable and/or temperable steel (14) is applied on the contact layer (12) in the form of strips which run in the longitudinal direction of the extruded profile component (10, 10').

8. Hybrid gearwheel (1), having a hub and a multiplicity of teeth (2) which surround the hub, **characterized in that** the hub has or consists of a light metal core (5) which, at least in the region of the tooth flanks (3, 4) of the teeth (2), is coated with a metallic contact layer (6) which is connected in an integrally joined manner to the light metal core (5) and in turn is coated at least at points with a hardenable and/or temperable steel (14) which is applied thereon in an integrally joined manner as a surface coating (7) which is arranged at least in those regions of the tooth flanks (3, 4) which can come into engagement with teeth of other gearwheels.

9. Hybrid gearwheel according to the preceding claim, **characterized in that** the hybrid gearwheel (1) is configured as a spur gear.

## Revendications

1. Procédé de fabrication d'une roue dentée hybride (1) avec une multiplicité de dents (2), **caractérisé en ce que** l'on dépose au moins par endroits un acier pouvant être trempé et/ou pouvant être traité (14) sur un noyau en métal léger (5) préparé en forme de disque, sur le côté périphérique extérieur de celui-ci, au moyen d'une technique d'assemblage par liaison matérielle, et on déforme ensuite l'ébauche ainsi obtenue au moyen d'une opération de déformation en une roue dentée hybride (1), dans lequel un flanc de dent (3, 4) ou les deux flancs de dent opposés (3, 4) des dents (2) de la roue dentée hybride (1) présentent sur leur surface extérieure l'acier pouvant être trempé et/ou pouvant être traité (14) déposé au préalable comme revêtement de surface (7).

2. Procédé selon la revendication 1, **caractérisé en ce que** le noyau en métal léger (5) est doté sur son côté périphérique extérieur d'abord d'une couche de contact (6, 12) en un acier, qui n'est pas un acier pouvant être trempé ou un acier pouvant être traité, et on dépose ensuite l'acier pouvant être trempé et/ou pouvant être traité (14) sur cette couche de contact (6, 12).

3. Procédé selon l'une quelconque des revendications précédentes, **caractérisé en ce que** l'on fabrique le noyau en métal léger (5), éventuellement de concert avec la couche de contact (6, 12), par un processus d'extrusion en tant que composant profilé extrudé d'abord allongé (10, 10') et on produit, par découpage du composant profilé extrudé (10, 10'), une multiplicité de noyaux en métal léger revêtus pour la fabrication de roues dentées hybrides (1).

4. Procédé selon la revendication précédente, **caractérisé en ce que** l'on fabrique le composant profilé extrudé (10, 10') sous la forme d'un composant profilé extrudé en au moins trois couches, avec un noyau intérieur (11) en métal léger, afin de former le noyau en métal léger (5) de la roue dentée hybride (1), une couche de contact (12) entourant le noyau intérieur (11) ainsi qu'une couche d'enveloppe (13) entourant la couche de contact (12), qui agit lors du processus d'extrusion pour réduire le frottement et/ou guider le flux de matière.

5. Procédé selon l'une des revendications 3 à 4, **caractérisé en ce que** l'on dépose l'acier pouvant être trempé et/ou pouvant être traité (14) sur le composant profilé extrudé (10, 10') avant le découpage.

6. Composant profilé extrudé de section transversale ronde, dans lequel le composant profilé extrudé (10, 10') présente une couche de contact extérieure en forme de gaine (12) en un matériau, qui permet un dépôt par liaison matérielle d'acier pouvant être trempé et/ou pouvant être traité (14), et un noyau intérieur de section transversale ronde (11) en métal léger, dans lequel le noyau (12) est assemblé par liaison matérielle à la couche de contact extérieure en forme de gaine, **caractérisé en ce que** le composant profilé extrudé (10, 10') présente à la périphérie extérieure au moins par endroits un acier pouvant être trempé et/ou pouvant être traité (14) déposé par liaison matérielle sur la couche de contact (12).

7. Composant profilé extrudé selon la revendication précédente, **caractérisé en ce que** l'acier pouvant être trempé et/ou pouvant être traité (14) est déposé sur la couche de contact (12) sous la forme de bandes s'étendant dans la direction longitudinale du composant profilé extrudé (10, 10').

8. Roue dentée hybride (1), présentant un moyeu et une multiplicité de dents (2) entourant le moyeu, **caractérisé en ce que** le moyeu présente un noyau en métal léger (5) ou en est constitué, qui est revêtu au moins dans la région des flancs de dent (3, 4) des dents (2) avec une couche de contact métallique (6) assemblée par liaison matérielle au noyau en métal léger (5), qui est à son tour revêtue au moins par endroits d'un acier pouvant être trempé et/ou pouvant être traité (14) déposé par liaison matérielle sur celle-ci en tant que revêtement de surface (7), qui est disposé au moins dans les régions des flancs de dent (3, 4), qui peuvent venir en prise avec des dents d'autres roues dentées.

9. Roue dentée hybride selon la revendication précédente, **caractérisée en ce que** la roue dentée hybride (1) forme une roue droite.
